# EUROPÄISCHE PATENTSCHRIFT

(11) **EP 0 584 550 B1**
(45) Veröffentlichungstag und Bekanntmachung des Hinweises auf die Patenterteilung: **03.01.1996**
(21) Anmeldenummer: 93111905.1
(22) Anmeldetag: 26.07.1993
(51) Int. Cl.: F16B 5/06, F16B 21/16, H05F 3/02, B64G 1/58

(54) **Clip**
Clip
Clip

(30) Priorität: 28.08.1992 DE 4228665
(43) Veröffentlichungstag der Anmeldung: 02.03.1994
(73) Patentinhaber: DORNIER GMBH, D-88004 Friedrichshafen (DE)
(72) Erfinder: Grossner, Peter, Ing., D-88677 Markdorf (DE)
(74) Vertreter: Landsmann, Ralf, Dipl.-Ing.

(56) Entgegenhaltungen:
- EP-A- 0 391 327
- AT-B- 353 559
- FR-A- 2 105 839
- FR-A- 2 370 188
- US-A- 3 023 473

## Beschreibung

### Clip

Die Erfindung betrifft einen Clip, insbesondere zur Befestigung einer aus mehreren Lagen bestehenden Isolierung für Raumfahrtanwendungen und für Vakuumsysteme. Präziser gesagt, ist der Gegenstand der Erfindung ein Clip zur MLI-Befestigung (MLI = Multilayerinsulation for space use and in vacuum systems).

Stand der Technik ist ein Clip aus Kunststoff, bei dem ein Steckstift die Wand der Isolation durchdringt und der Gegenhalter eine gelochte Scheibe aus Kunststoff ist, die über eine am Ende des Schafts des Steckstifts befindliche Kappe eingeschnappt wird.

Clip dieser Art laden sich statisch auf und stören die Funktion des Satelliten.

Aus der **EP-A 0 391 327** ist ein Clip zur MLI-Befestigung an einem Satelliten bekannt. Hierbei wird die Isolation von einer Klammer umschlossen. Die Klammer wird durch einen Klettverschluß an dem Satelliten befestigt.

Aus der **US 30 23 473** ist ein Clip bekannt, der einen Steckstift sowie einen elastischen Halter umfaßt.

Der elastische Halter enthält auf zwei sich gegenüberliegenden Wänden jeweils Löcher zur Aufnahme des Steckstifts. Die beiden Enden des Halters sind umgebogen und werden zum Verschließen des Clips übereinandergeschoben, so daß sie sich überlappen.

Aufgabe der Erfindung ist es, einen Clip für die Befestigung von Superisolationen (MLI), insbesondere an Satelliten zu schaffen, der leicht montierbar, demontierbar und austauschbar ist und einen gleichmäßigen Anpressdruck gewährleistet.

Aufgabe und Anforderungen werden gelöst durch einen Clip nach dem Gegenstand des Hauptanspruchs und der Unteransprüche.

Die Erfindung wird nachfolgend anhand von Figuren näher erläutert.

Es zeigen:
- Fig. 1 und 2: einen zum Stand der Technik gehörenden Clip in Querschnittsansicht und Draufsicht,
- Fig. 3 und 4: einen erfindungsgemäßen Clip in Schnittansicht und Draufsicht und
- Fig. 5 bis 7: eine erfindungsgemäße Einzelheit in Ansicht und Schnittdarstellung.

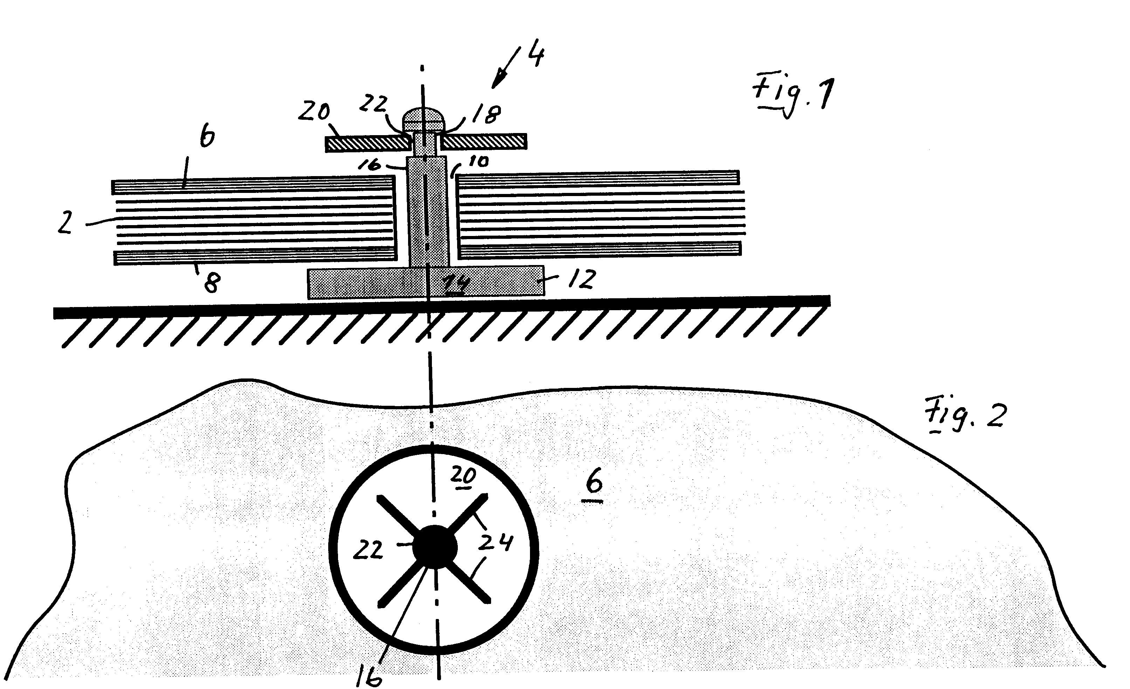

Fig. 1 und 2 zeigen die Wandung **2** einer Superisolation zur Verwendung an Satelliten. Die Wandung besteht aus mehreren Lagen unterschiedlicher Materialien, die lose übereinander gelegt sind und durch einen Clip **4** mechanisch miteinander verbunden werden. Die Deckschichten **6**, **8**, der Wandung **2** bestehen aus einer mit Aluminium bedampften Polyamidfolie. (Handelsbezeichnung : Kapton)

In der Wandung **2** befindet sich ein Loch **10**, in das ein Steckstift **12** eingebracht ist. Der Steckstift **12** besteht aus einer Scheibe **14** und einem Schaft **16**. Im Bereich des Schaftendes ist eine Nut **18** vorhanden, in die der Gegenhalter **20** mit seinem Loch **22** eingeschnappt ist. Um eine plastische Verformung des Gegenhalters **20** beim Einclipsen zu vermeiden, sind mehrere Einschnitte **24** im Bereich des Loches **22** vorhanden.

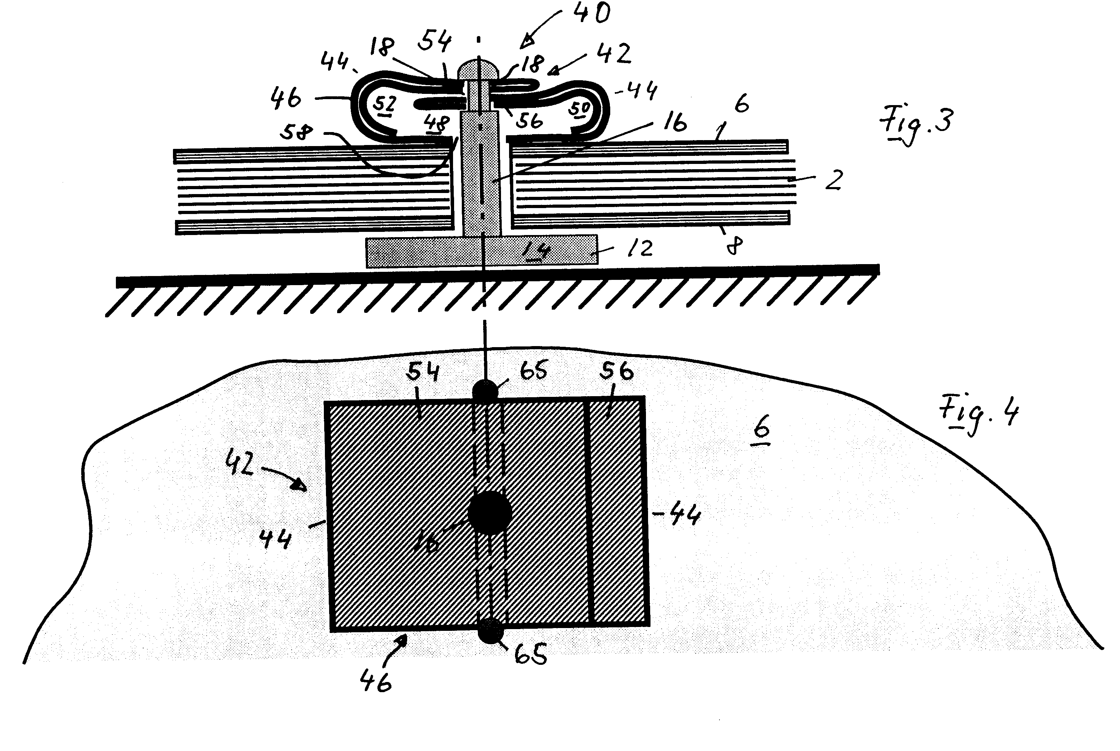

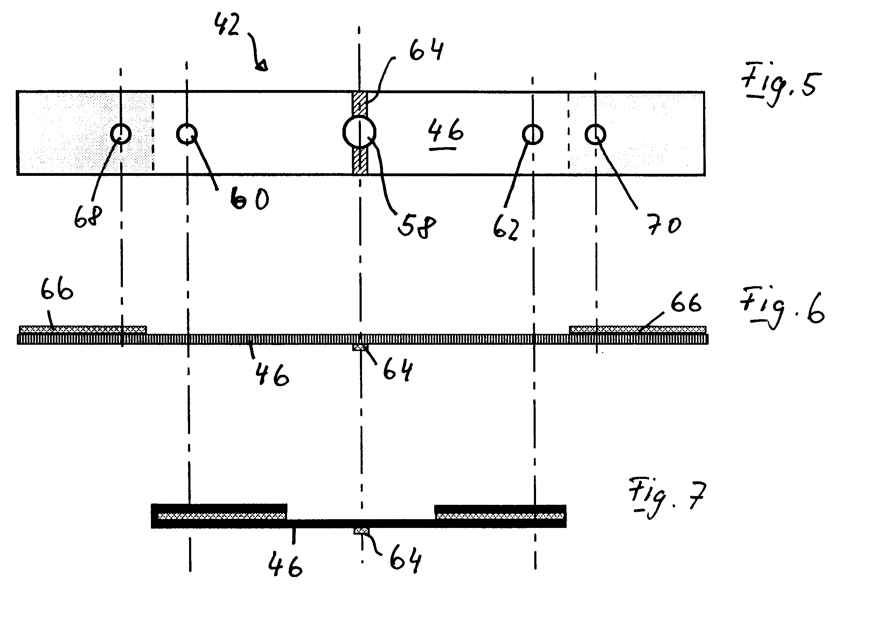

In Fig. 3 bis 7 ist der erfindungsgemäße Clip **40** gezeigt, wobei für gleiche Bauteile die Bezugszeichen der Fig. 1 und 2 verwendet sind. Der erfindungsgemäße Clip **40** hat einen anderen Gegenhalter **42**, der aus einem nach beiden Seiten **44** umgefalteten Streifen **46** aus Kaptonfolie besteht. Der Gegenhalter bildet eine Schlaufe **48** mit Biegeradien **50**, **52** und sich überlappenden Enden **54**, **56**. Der Streifen **46** hat Löcher **58**, **60**, **62** zur Aufnahme des Steckstifts **12**. Dabei hat das zentrale Loch **58** einen grösseren Durchmesser als die in die Nut **18** einschnappenden Löcher **60** und **62**. Im Bereich des Loches **58** ist ein selbstklebendes Doppelklebeband **64** vorhanden, das in Fig. 5 bis 7 deutlich zu sehen ist. Dieses Klebeband macht den Gegenhalter **42** unverlierbar. Bei **65** ist zusätzlich leitfähiger Klebstoff vorgesehen.

Durch Einschlagen eines Klebebandes **66** können auch die Enden **54** und **56** gedoppelt werden; dies ist in Fig. 3 und 7 gezeigt.

Bei gedoppelten Enden sind im unverformten Streifen (Fig. 5) zwei weitere Löcher **68, 70**vorhanden.

Zur Erdung des Clips ist der Streifen **46** mit elektrish leitendem Material beschiechtet, das einem Kontakt zur Deckschicht **6** der Wandung **2**herstellt.

## Patentansprüche

1. Clip, bestehend aus einem Steckstift, der eine Wand durchdringt und einem elastischen Gegenhalter, wobei der Gegenhalter (**42**) ein auf beiden Seiten (**44**) umgefalteter Streifen (**46**) aus biegeelastischem Material mit sich überlappenden Enden (**54, 56**) ist und die aus dem Streifen (**46**) gebildete Schlaufe (**48**) Löcher ( **58, 60, 62, 68, 70**) zur Aufnahme des Steckstifts aufweist, dadurch gekennzeichnet, daß mindestens eines der Löcher (**58, 60, 62, 68, 70**) im Bereich der sich überlappenden Enden (**54, 56**) liegt.

2. Clip nach Anspruch 1, **dadurch gekennzeichnet**, daß die Enden des Streifens (**46**) gedoppelt sind.

3. Clip nach Ansprüchen 1 und 2, **dadurch gekennzeichnet**, daß der Gegenhalter (**42**) aus elektrisch leitendem Material besteht.

4. Clip nach Ansprüchen 1 und 2, **dadurch gekennzeichnet**, daß der Gegenhalter (**42**) mit elektrisch leitendem Material beschichtet ist.

5. Clip nach Ansprüchen 1 bis 4, **dadurch gekennzeichnet**, daß der Gegenhalter (**42**) im Bereich der Wand (**6**) mit eine selbstklebenden Kleber (**65**) beschichtet ist.

6. Clip nach Ansprüchen 1 bis 5, **dadurch gekennzeichnet**, daß der Gegenhalter (**42**) im Bereich der Wand ein selbstklebendes Doppelklebeband (**64**) aufweist.

7. Clip nach Ansprüchen 1 bis 6, **dadurch gekennzeichnet**, daß der Kleber (**65**) elektrisch leitfähig ist.

## Claims

1. Clip comprising a pin which extends through a wall and a resilient retainer, the retainer (42) being a strip (46) of flexible, resilient material turned over on both sides (44) with overlapping ends (54, 56) and the loops (48) formed by the strips (46) having holes (58, 60, 62, 68, 70) for receiving the pin, **characterized in that** at least one of the holes (58, 60, 62, 68, 70) is disposed in the region of the overlapping ends (54, 56).

2. Clip according to Claim 1, **characterized in that** the ends of the strip (46) are doubled.

3. Clip according to Claims 1 and 2, **characterized in that** the retainer (42) is composed of electrically conductive material.

4. Clip according to Claims 1 and 2, **characterized in that** the retainer (42) is coated with electrically conductive material.

5. Clip according to Claims 1 to 4, **characterized in that** the retainer (42) is coated with a self-adhesive bonding agent (65) in the region of the wall (6).

6. Clip according to Claims 1 to 5, **characterized in that** the retainer (42) comprises a double-sided self-adhesive tape (64) in the region of the wall.

7. Clip according to Claims 1 to 6, **characterized in that** the bonding agent is (65) is electrically conductive.

## Revendications

1. Clip constitué par une broche enfichable traversant une paroi et une butée conjuguée, la butée élastique conjuguée (42) étant constituée par une bande (46) en matériau souple, repliée sur les deux côtés (44), dont les extrémités (54, 56) se recouvrent, et la boucle (48) formée par la bande (46) présentant des trous (58, 60, 62, 68, 70) pour la réception de la broche enfichable, **caractérisé en ce** qu'au moins l'un des trous (58, 60, 62, 68, 70) est situé dans la région des extrémités (54, 56) en recouvrement.

2. Clip selon la revendication 1, caractérisé en ce que les extrémités de la bande (46) sont doublées.

3. Clip selon les revendications 1 et 2, caractérisé en ce que la butée conjuguée (42) est constituée d'un matériau électriquement conducteur.

4. Clip selon les revendications 1 et 2, caractérisé en ce que la butée conjuguée (42) est revêtue d'un matériau électriquement conducteur.

5. Clip selon l'une des revendications 1 à 4, caractérisé en ce que la butée conjuguée (42) est revêtue dans la région de la paroi (6), d'une matière auto-adhésive (65).

6. Clip selon l'une des revendications 1 à 5, caractérisé en ce que la butée conjuguée (42) présente dans la région de la paroi une bande auto-adhésive double face (64).

7. Clip selon l'une des revendications 1 à 6, caractérisé en ce que la colle (65) est électriquement conductrice.
